# Europäisches Patentamt

## European Patent Office

## Office européen des brevets

(11) Veröffentlichungsnummer: **0 013 752**
**B1**

(12)

# EUROPÄISCHE PATENTSCHRIFT

(45) Veröffentlichungstag der Patentschrift:
20.07.83

(51) Int. Cl.³: **C 08 J 3/20, C 08 L 23/02**

(21) Anmeldenummer: **79105329.1**

(22) Anmeldetag: **21.12.79**

(54) **Verfahren zur Herstellung kleinteiliger Polyolefin-Formmassen mit verbesserten Eigenschaften und deren Verwendung zur Herstellung von Formkörpern.**

(30) Priorität: **18.01.79 DE 2901759**

(43) Veröffentlichungstag der Anmeldung:
**06.08.80 Patentblatt 80/16**

(45) Bekanntmachung des Hinweises auf die Patenterteilung:
**20.07.83 Patentblatt 83/29**

(84) Benannte Vertragsstaaten:
**BE DE FR GB IT NL**

(56) Entgegenhaltungen:
**DE-A-2 260 213**
**DE-A-2 354 529**
**GB-A-1 447 304**
**US-A-4 045 403**

(73) Patentinhaber: **BASF Aktiengesellschaft,
Carl-Bosch-Strasse 38, D-6700 Ludwigshafen (DE)**

(72) Erfinder: **Theysohn, Rainer, Dr. Dipl.-Chem., Bruesseler
Ring 38, D-6700 Ludwigshafen (DE)**
Erfinder: **Zeitler, Gerhard, Dr. Dipl.-Chem.,
Lessingstrasse 11, D-6711 Hessheim (DE)**
Erfinder: **Weiss, Frank, Dr. Dipl.-Ing., Gontardstrasse 4,
D-6800 Mannheim 1 (DE)**
Erfinder: **Seiler, Erhard, Dr. Dipl.-Chem., Erpolzheimer
Strasse 1, D-6700 Ludwigshafen (DE)**

## Verfahren zur Herstellung kleinteiliger Polyolefin-Formmassen mit verbesserten Eigenschaften und deren Verwendung zur Herstellung von Formkörpern

Die Erfindung betrifft ein Verfahren zur Herstellung kleinteiliger Polyolefin-Formmassen mit verbesserten Eigenschaften. Diese sind aufgebaut aus (a) 100 Gewichtsteilen eines kleinteiligen, teilkristallinen Polyolefins, das einen Teilchendurchmesser im Bereich von 10 bis 5000 µm hat und eine Grenzviskosität $[\eta]$, gemessen in Decalin bei 130 °C, im Bereich von 0,5 bis 15 aufweist, (b) 0,001 bis 2 Gewichtsteilen eines üblichen Stabilisators oder eines üblichen Stabilisatorgemisches gegen thermooxidativen Angriff, wobei – falls die Stabilisatoren in Pulverform eingesetzt werden – die mittlere Primärkorngrösse im Bereich von 0,1 bis 50 µm liegt und jeweils kleiner sein soll als $^{1}/_{50}$ des mittleren Korndurchmessers des eingesetzten feinteiligen Polyolefins (c) – gegebenenfalls – 0,1 bis 10 Gew.-Teilen eines globulären oder blättchenförmigen Additivs, das einen maximalen Teilchendurchmesser von $<20$ µm hat, einen mittleren Teilchendurchmesser aufweist, der kleiner als $^{1}/_{50}$ des mittleren Teilchendurchmessers des Polyolefins (a) ist und eine Erweichungstemperatur besitzt, die mindestens 50 °C über dem Kristallitschmelzpunkt des Polyolefins liegt sowie (d) – gegebenenfalls – üblichen Mengen üblicher anderer Zusatz- bzw. Hilfsstoffe.

Bei derartigen Polyolefin-Formmassen, die mit Additiven versehen sind, handelt es sich um Massen, die in üblichen Verfahren, wie z.B. im Spritzguss oder durch Extrusion zu geformten Polyolefin-Formteilen, verarbeitet werden können.

Die Ausrüstung von Polyolefinen mit Stabilisatoren vor allem gegen eine thermooxidative Schädigung sowohl bei der Verarbeitung als auch während des Gebrauches daraus hergestellter Teile ist ein bekanntes Verfahren.

Nachteilig ist hierbei, dass z.T. recht erhebliche Mengen an durchweg, im Vergleich zum Polyolefin, recht teuren Stabilisatoren eingesetzt werden müssen, um befriedigende Ergebnisse zu erhalten. In der Praxis erfolgt die Zugabe von Stabilisatoren meist nach zwei Verfahren. Im ersten Fall geht man von einem pulver- oder griessförmigen Polyolefinpolymerisat aus und stellt in einer geeigneten Misch- oder Rühreinrichtung eine möglichst homogene Trockenmischung aus Stabilisator und Polymer her. Die Arbeitstemperatur liegt hier im Bereich der Raumtemperatur oder geringfügig höher. Nachteile dieses Verfahrens sind die Gefahr der Entmischung von Stabilisator und Polyolefin z.B. beim Weitertransport, zu dem die z.T. erhebliche Menge an Stabilisator, die für optimale Fertigteile notwendig ist, und weiterhin eine durchweg feststellbare Verschlechterung des Einzugsverhaltens und Verringerung des Durchsatzes bei der Verarbeitung.

Im zweiten Fall werden diese Nachteile weitgehend dadurch vermieden, dass der Stabilisator in das aufgeschmolzene Polymere eingebracht und dort homogen verteilt wird. Diese Verfahrensweise bedingt einmal einen nicht unbeträchtlichen technischen Aufwand bei der genauen Dosierung der relativ geringen Stabilisatormengen, ist zudem sehr kostenintensiv, da das Polymere vollständig aufgeschmolzen wird und ist nicht geeignet, bei solchen Polyolefinen, die wegen ihres hohen Molekulargewichts oder wegen partieller Vernetzung durch die beim Aufschmelzen und Mischen zwangsläufig erfolgende Scherwirkung irreversibel geschädigt werden.

Aufgabe war es daher, ein sowohl in bezug auf Stabilisatormenge als auch Einbringungsverfahren kostengünstiges und apparativ einfaches Verfahren zum Stabilisieren von Polyolefinen zu entwickeln, das die Nachteile des Standes der Technik vermeidet, und zu Formmassen führt, die sich leicht und mit gutem Durchsatz zu einwandfreien Formkörpern hoher Stabilität verarbeiten lassen.

Die Aufgabe wurde erfindungsgemäss dadurch gelöst, dass man die Komponente (a) – kleinteiliges, teilkristallines Polyolefin – und gegebenenfalls (d) – andere Zusatz- und Hilfsstoffe – vorlegt und in einer ersten Arbeitsstufe (I) in einem Mischer – gegebenenfalls unter Zufuhr oder Abfuhr äusserer Wärme – rührt, in einer ersten Unterstufe (I.1) bei einer Mischintensität im Bereich von 100 bis 500 W/l Nutzinhalt innerhalb einer Zeitspanne $(t_1)$ von 2 bis 50 Minuten, vorzugsweise 5 bis 20 Minuten, von Umgebungstemperatur, die unterhalb der Kristallitschmelztemperatur des Polyolefins (a) liegt und insbesondere Raumtemperatur ist, auf eine Temperatur $(T_1)$ bringt, die 0 bis 15 °C, vorzugsweise 2 bis 10 °C, unterhalb der Kristallitschmelztemperatur des Polyolefins (a) liegt; unmittelbar darauf im Verlauf einer zweiten Unterstufe (I.2) auf eine Mischintensität übergeht, die 0,2- bis 0,8-, vorzugsweise 0,3- bis 0,7mal so gross ist wie die Mischintensität in der ersten Unterstufe (I.1), und innerhalb einer Zeitspanne $(t_2)$ von 0,1 bis 10 Minuten, vorzugsweise 0,2 bis 5 Minuten, von der Temperatur $(T_1)$ des Polyolefins (a) auf eine Temperatur $(T_2)$ bringt, die 1 bis 20 °C, vorzugsweise 5 bis 10 °C, oberhalb der Kristallitschmelztemperatur des Polyolefins (a) liegt, und weitgehend kontinuierlich über die Zeitspanne $(t_2)$ verteilt, Additiv (b), gegebenenfalls auch (c) oder ein Gemisch aus (b) und (c) zugibt, unmittelbar hiernach in einer zweiten Arbeitsstufe (II) innerhalb einer Zeitspanne von 0,5 bis 30 Sekunden aus dem Mischer austrägt und innerhalb von 120 Sekunden auf eine Temperatur unterhalb der Kristallitschmelztemperatur des Polyolefins (a) bringt, oder das Produkt ohne weitere Abkühlung durch geeignete Vorrichtungen direkt plastisch weiterverarbeitet.

Unter kleinteiligen, teilkristallinen Polyolefinen (a) werden solche verstanden, die einen Teilchendurchmesser im Bereich von 10 bis 5000, vorzugsweise 100 bis 2000 µm aufweisen und deren Grenzviskosität $[\eta]$ (gemessen nach DIN 53728 in Decalin bei 130 °C) im Bereich von 0,5 bis 15, vorzugsweise 1 bis 10, liegt. Bei den Polyolefinen handelt es sich vorzugsweise um Polyäthylen hoher Dichte (0,93 bis 0,97 g/cm³) und um Polypropylen, insbesondere um ein solches, das nach dem Gasphasen-Verfahren, wie z.B. in der DE-AS 1 217 071 beschrieben, hergestellt wurde, Copolymere von Äthylen und Propylen, sofern sie noch kristalline Anteile enthalten, sowie um entsprechende Polymere, die bis zu 5 Gew.-% Acrylsäure aufgepropft enthalten.

Unter teilkristallinen Polyolefinen seien solche verstanden, die bei der DSC-Analyse zumindest einen Schmelzpeak aufweisen.

Als Stabilisatoren (b) gegen thermooxidativen Abbau sind praktisch alle marktgängigen Typen geeignet. Als günstig haben sich auch Kombinationen unterschiedlicher Stabilisatortypen erwiesen, wobei synergistische Effekte eintreten können. Als Beispiele seien genannt: Sterisch gehinderte Phenole, wie sie z.B. von der Firma Ciba-Geigy, Basel, Schweiz, unter den Warenzeichen Irganox 1076, Irganox 1098 oder Irganox 1010 geliefert werden; schwefelhaltige Verbindungen wie z.B. Irganox PS 802 vor allem in Kombination mit phenolischen Stabilisatoren, wie z.B. Irganox 1010; weiterhin Ester der phosphorigen Säure, wie z.B. Tris-2,4-di-tertiär-butyl-phenyl-phosphit, vorzugsweise ebenfalls in Kombination mit sterisch gehinderten Phenolen. Die Stabilisatoren werden vorzugsweise in Pulverform eingesetzt, wobei die mittlere Primär-Korngrösse im Bereich von 0,1 bis 50 µm liegt und jeweils kleiner sein soll als 1/50 des mittleren Korndurchmessers des eingesetzten feinteiligen Polyolefins.

Unter globulären oder blättchenförmigen Additiven gemäss (c) werden Produkte verstanden, die folgende Grössenordnungen aufweisen: globuläre Additive, darunter seien auch solche Additive verstanden, deren Habitus weder fasernoch blättchenförmig ist, mit einem mittleren Teilchendurchmesser von 0,001 bis 10 µm, vorzugsweise 0,01 bis 5 µm; blättchenförmige Additive mit einem mittleren Blättchendurchmesser von 1 bis 20, vorzugsweise 5 bis 15 µm und einer Blättchendicke von 0,001 bis 5, vorzugsweise 0,01 bis 3 µm, wobei der mittlere Teilchen- bzw. Blättchendurchmesser kleiner als $^1/_{50}$, vorzugsweise kleiner als $^1/_{100}$ des mittleren Teilchendurchmessers des Polyolefins (a) sein soll. Die Additive (c) sollen einen Schmelz- oder Erweichungsbereich besitzen, der mindestens 50 °C über den Kristallitschmelzpunkt des Polymeren (a) liegt. Als Beispiele für globuläre Additive seien genannt Kreide, calc. Kaolin, Bariumsulfat, Teflonpulver sowie organische und anorganische Farbpigmente, wie z.B. $TiO_2$ oder ZnS; als Beispiele für blättchenförmige Additive seien Talkum, Glimmer oder Kaolin genannt.

Als Hilfs- und Zusatzstoffe (d) kommen in Frage: übliche Gleit- und Entformungsmittel, Stabilisatoren gegen UV-Schädigung, Haft- und Verträglichkeitsvermittler und Treibmittel.

Die Herstellung der Formmassen kann erfolgen in einem Mischer, in dem die Mischerflügel senkrecht zur Mischerachse angeordnet sind und wie es z.B. in der DE-AS 1 054 073 oder DE-AS 1 454 368 beschrieben ist. Derartige Mischer wurden bisher hauptsächlich zur Aufbereitung von nichtkristallinen Thermoplasten wie PVC oder auch ABS eingesetzt. Sie sind aber auch zum Agglomerieren von feinteiligen Polyolefinen geeignet, wobei eine günstigere Verarbeitung erreicht wird. Der Beschreibung der DE-OS 2 302 370 ist zu entnehmen, dass bei der Aufarbeitung von Polyolefinpulvern in schnellaufenden Mischern, die maximale Arbeitstemperatur 2 bis 13 °C unterhalb des Schmelzbereiches des Polyolefins liegen sollte, um ein Verkleben bzw. Verklumpen zu vermeiden.

Überraschend wurde nun gefunden, dass es nach dem erfindungsgemässen Verfahren möglich ist, auch im Temperaturbereich oberhalb des Kristallitschmelzpunktes des betreffenden Polyolefins zu arbeiten, ohne dass eine nennenswerte Agglomeration oder sogar Klumpenbildung stattfindet. Es resultiert ein sehr dichtes Polymerkorn, wodurch die Schüttdichte des Produktes und das Einzugsverhalten bei der Verarbeitung deutlich verbessert wird. Das Produkt ist zudem frei an ungebundenen Zuschlägen gemäss (b) bzw. auch (c). Weiterhin wurde überraschend gefunden, dass durch die erfindungsgemässe Fahrweise der Gehalt an Stabilisator (b), im Vergleich zu konventioneller Fahrweise reduziert, werden kann. Es resultieren feinteilige Formmassen mit verbesserten Verarbeitungseigenschaften, wie Einzugsverhalten, erhöhten Durchsatz, einwandfreie Oberflächenqualität und erhöhte thermische Langzeitstabilität.

Anschliessend wird in einer zweiten Arbeitsstufe (II) das Produkt innerhalb von 0,5 bis 30, vorzugsweise 0,5 bis 10 Sekunden aus dem Mischer ausgetragen und innerhalb von 120 Sekunden auf eine Temperatur unterhalb des Polymerschmelzpunktes abgekühlt oder das Produkt wird ohne weitere Abkühlung durch geeignete Vorrichtungen direkt plastisch weiterverarbeitet.

Unter Mischintensität in Watt pro Liter Nutzinhalt wird hierbei die Energieaufnahme des Mischers, bezogen auf ein Liter Volumen, den die Komponenten (a), (b), (c) — gegebenenfalls (d) — im Mischer einnehmen, verstanden.

Das beschriebene Verfahren ist apparativ und energetisch weit weniger aufwendig als z.B. eine Extruderkonfektionierung. Darüber hinaus hat das Verfahren den Vorteil, dass es auch bei schwer verarbeitbaren Thermoplasten, wie ultrahochmolekulares Polyäthylen ohne Schädigung des Polymeren anwendbar ist. Weiterhin zeichnet sich das Verfahren dadurch aus, dass im Vergleich zu einer Extruderkonfektionierung der Gehalt an Stabilisator(en) reduziert werden kann. Diese Einsparung ist besonders ausgeprägt, wenn das erfindungsgemäss hergestellte Gemisch mit einer herkömmlichen mechanischen Mischung von Polymer (a) und Stabilisator(en) (b) verglichen wird. Sehr vorteilhaft wirkt sich zudem, aufgrund der hohen erzielbaren Schüttdichten, das verbesserte Einzugs- und Durchsatzverhalten aus.

Die kleinteiligen, stabilisierten Polyolefin-Formmassen können verwendet werden zur Herstellung von Folien und Formkörpern nach den üblichen Spritzguss-, Extrusions- und Hohlkörperblasverfahren.

Die folgenden Beispiele verdeutlichen das oben genannte Verfahren:

Beispiel 1

Ausgangsmaterialien sind 25 kg (entsprechend 100 Gewichtsteilen) eines kleinteiligen Polyäthylens, das einen Teilchendurchmesser im Bereich von 250 bis 2000 µm und einen mittleren Teilchendurchmesser von 800 µm hat und eine Grenzviskosität $[\eta]$ von 4,8 aufweist. Das kleinteilige Polyäthylen wurde in einer ersten Arbeitsstufe (I) in einen Mischer gemäss DE-AS 1 454 768 von 100 l Inhalt – ohne äussere Zu- oder Abfuhr von Wärme – in einer ersten Unterstufe (I.1) bei einer Mischintensität von 250 W/l Nutzinhalt innerhalb einer Zeitspanne ($t_1$) von 8,2 Minuten von Umgebungstemperatur (= Raumtemperatur) auf eine Temperatur $T_1$ von 132 °C, die ca. 6 °C unterhalb der Kristallitschmelztemperatur des Polyäthylens liegt, gebracht; unmittelbar darauf in einer zweiten Unterstufe (I.2) bei einer Mischintensität, die im Mittel 0,42mal so gross ist wie die Mischintensität in der ersten Unterstufe (I.1), innerhalb einer Zeitspanne ($t_2$) von 3,6 Minuten von der Temperatur $T_1$ auf eine Temperatur $T_2$ (= 144 °C) gebracht, die 6 °C über der Kirstallitschmelztemperatur des Polyäthylens ($\approx$ 138 °C) liegt, wobei kontinuierlich über die Zeitspanne ($t_2$) verteilt, ein Gemisch aus 0,025 kg (entsprechend 0,1 Gewichtsteilen) Tris-2,4-di-tertiärbutylphenyl-phosphit und 0,005 kg (entsprechend 0,02 Gewichtsteilen) Irganox 1010 (der Firma Ciba-Geigy) mit einer Korngrösse im Bereich von 0,1 bis 5 µm zugegeben wurden, und unmittelbar hierauf in einer zweiten Arbeitsstufe (II) innerhalb einer Zeitspanne von 5 Sekunden aus dem Mischer ausgetragen und innerhalb von 30 Sekunden auf eine Temperatur (= 76 °C) unterhalb der Kristallitschmelztemperatur des Polyäthylens gebracht.

Beispiel 2

Der Versuch aus Beispiel 1 wurde wiederholt, wobei jedoch im Verlaufe der zweiten Unterstufe (I.2) ein Gemisch aus 0,025 kg (entsprechend 0,1 Gewichtsteilen) Tris-2,4-di-tertiär-butyl-phenyl-phosphit, 0,005 kg (entsprechend 0,02 Gewichtsteilen) Irganox 1010 und 0,5 kg (entsprechend 2 Gewichtsteilen) Talkum mit einem mittleren Blättchendurchmesser von 14 µm und einer mittleren Blättchendicke von 1,8 µm zugegeben wurden.

Die Mischintensität in der zweiten Unterstufe (I.2) war im Mittel 0,39mal so gross wie die in der ersten Unterstufe (I.1) (= 250 W/l Nutzinhalt).

Das Gemisch wurde hierbei innerhalb einer Zeitspanne ($t_2$) von 5 Minuten von der Temperatur $T_1$ (= 132 °C) auf die Temperatur $T_2$ (= 148 °C) gebracht, die 10 °C über der Kristallitschmelztemperatur des Polyäthylens ($\approx$ 138 °C) liegt. Austrag und Abkühlung erfolgte gemäss Beispiel 1.

Beispiel 3 (Vergleichsbeispiel)

Ausgangsmaterialien sind 25 kg (100 Gewichtsteile) eines kleinteiligen Polyäthylens wie in Beispiel 1, 0,025 kg (0,1 Gewichtsteil) Tris-2,4-di-tertiär-butyl-phenyl-phosphit und 0,005 kg (0,02 Gewichtsteile) Irganox 1010. Das Gemisch wurde in einer ersten Arbeitsstufe (I) in einem Mischer gemäss DE-AS 1 454 768 von 100 l Inhalt – ohne äussere Zu- oder Abfuhr von Wärme – in einer ersten Unterstufe (I.1) bei einer Mischintensität von 246 W/l Nutzinhalt innerhalb einer Zeitspanne ($t_1$) von 8,5 Minuten von Umgebungstemperatur (= Raumtemperatur) auf eine Temperatur $T_1$ von 132 °C, die ca. 6 °C unterhalb der Kristallitschmelztemperatur des Polyäthylens liegt, gebracht. Hier wurde auf eine Mischintensität übergegangen, die ca. 0,42mal so gross war wie die in der ersten Stufe (I.1). Bereits nach 30 Sekunden bei einer Temperatur von 135 °C begann das Gemisch zu blocken und es bildeten sich grössere Agglomerate und Klumpen, so dass der Versuch abgebrochen werden musste.

Beispiel 4 (Vergleichsbeispiel)

Es wurde wie in Beispiel 3 verfahren, mit dem Unterschied, dass das Gemisch nach Ende der ersten Unterstufe (I.1) bei 132 °C innerhalb von 5 Sekunden aus dem Mischer ausgetragen und innerhalb von 22 Sekunden auf 80 °C abgekühlt wurde.

Beispiel 5 (Vergleichsbeispiel)

Ausgangsmaterialien sind 25 kg (100 Gewichtsteile) eines kleinteiligen Polyäthylens wie in Beispiel 1, 0,025 kg (0,1 Gewichtsteil) Tris-2,4-di-tertiär-butyl-phenyl-phosphit und 0,005 kg (0,02 Gewichtsteile) Irganox 1010. Die Produkte wurden in einen Taumelmischer gegeben und dort 10 Minuten lang bei Raumtemperatur gemischt (mechanische Trockenmischung).

Von den in den Beispielen 1, 2, 4 und 5 hergestellten kleinteiligen Produkten wurde das Schüttgewicht bestimmt, sowie auf einen Extruder mit Hohlkörperblaseinrichtung vom Typ Kautex V8, Schnecke 40 mm Durchmesser, 18 D, mit genuteter Einzugszone, bei gleichen Maschinenbedingungen der maximale Durchsatz und das Aussehen blasgeformter Flaschen von 100 ml Volumen ermittelt. Die Ergebnisse sind in Tabelle 1 zusammengestellt.

Tabelle 1

| Beispiel | Schüttgewicht g/1000 ml | max. Durchsatz kg/Stunde | Aussehen blasgeformter 100 ml-Flaschen |
|---|---|---|---|
| 1 | 570 | 32 | glatte Oberfläche, keine Inhomogenitäten |
| 2 | 592 | 34 | glatte Oberfläche, keine Inhomogenitäten |
| 4 (Vergleich) | 485 | 26 | leicht unregelmässige Oberfläche («Gitterstruktur») |
| 5 (Vergleich) | 472 | 21 | unregelmässige Oberfläche («Gitterstruktur») |

Beispiel 6

Ausgangsmaterialien sind 20 kg (100 Gewichtsteile) eines kleinteiligen Polypropylens, das einen Teilchendurchmesser im Bereich von 25 bis 1000 μm und einen mittleren Teilchendurchmesser von 400 μm hat und eine Grenzviskosität $[\eta]$ von 2,7 aufweist. Das kleinteilige Polypropylen wurde in einer ersten Arbeitsstufe (I) in einen Mischer wie in Beispiel 1 erwähnt – ohne äussere Zu- oder Abfuhr von Wärme – in einer ersten Unterstufe (I.1) bei einer Mischintensität von 237 W/l Nutzinhalt innerhalb einer Zeitspanne $(t_1)$ von 12 Minuten von Umgebungstemperatur (= Raumtemperatur) auf eine Temperatur $T_1$ von 157 °C, die ca. 3 °C unterhalb der Kristallitschmelztemperatur des Polypropylens liegt, gebracht; unmittelbar darauf in einer zweiten Unterstufe (I.2) bei einer Mischintensität, die im Mittel 0,50mal so gross ist wie die Mischintensität in der ersten Unterstufe (I.1), innerhalb einer Zeitspanne $(t_2)$ von 2,1 Minuten von der Temperatur $T_1$ auf eine Temperatur $T_2$ (= 165 °C) gebracht, die 5 °C über der Kristallitschmelztemperatur des Polypropylens ($\approx$ 160 °C) liegt, wobei kontinuierlich über die Zeitspanne $t_2$ verteilt, ein Gemisch aus 0,1 kg (0,5 Gewichtsteile) Irganox 1010 und 0,2 kg (1 Gewichtsteil) Titandioxid vom Anatastyp mit einer Korngrösse <1 μm zugegeben wurden, und unmittelbar hierauf in einer zweiten Arbeitsstufe (II) innerhalb einer Zeitspanne von 5 Sekunden aus dem Mischer ausgetragen und innerhalb von 60 Sekunden auf 80 °C abgekühlt.

Das feinteilige Produkt ist frei fliessend und weist eine Korngrössenverteilung auf, die etwas kleiner ist als die des eingesetzten Polypropylens.


Beispiel 7 (Vergleichsbeispiel)

Ausgangsmaterialien sind 20 kg (100 Gewichtsteile) eines kleinteiligen Polypropylens wie in Beispiel 6 beschrieben, 0,1 kg (0,5 Gewichtsteile) Irganox 1010 und 0,2 kg (1 Gewichtsteil) Titandioxid wie in Beispiel 6. Die Komponenten wurden in einem Taumelmischer gegeben und dort bei Raumtemperatur 10 Minuten lang gemischt (mechanische Trockenmischung).


Beispiel 8 (Vergleichsbeispiel)

Das in Beispiel 7 erhaltene weitgehend homogene mechanische Trockengemisch wurde einem Zwischenschneckenkneter vom Typ ZSK der Firma Werner und Pfleider zugeführt, dort bei 250 °C aufgeschmolzen, schmelzgemischt, in Strängen ausgetragen, gekühlt und granuliert.

Aus den in Beispielen 6 und 7 erhaltenen feinteiligen Produkten und dem in Beispiel 8 erhaltenen Granulat wurden unter gleichen Bedingungen 1 mm dicke Blättchen spritzgegossen, an denen die Stabilität gegen trockene Hitze nach DIN 53 383 Teil 1 bei 150 °C Ofenlagerung bestimmt wurde. Als Mass für die Hitzestabilität diente der Zeitraum bis zur beginnenden lokalen Versprödung der Prüfkörper. Die Ergebnisse sind in Tabelle 2 zusammengestellt.

Tabelle 2

| Beispiel | Beginn der lokalen Versprödung nach Stunden Ofenlagerung bei 150 °C |
|---|---|
| 6 | 3000 Stunden |
| 7 | 1950 Stunden |
| 8 | 2200 Stunden |

**Patentansprüche**

1. Verfahren zur Herstellung kleinteiliger Polyolefin-Formmassen mit verbesserten Eigenschaften, die aufgebaut sind aus

a) 100 Gewichtsteilen eines kleinteiligen, teilkristallinen Polyolefins, das einen Teilchendurchmesser im Bereich von 10 bis 5000 μm hat und eine Grenzviskosität $[\eta]$, gemessen in Decalin bei 130 °C, im Bereich von 0,5 bis 15 aufweist,

b) 0,001 bis 2 Gewichtsteilen eines üblichen Stabilisators oder eines üblichen Stabilisatorgemisches gegen thermooxidativen Angriff, wobei – falls die Stabilisatoren in Pulverform eingesetzt werden – die mittlere Primärkorngrösse im Bereich von 0,1 bis 50 μm liegt und jeweils kleiner sein soll als $^1/_{50}$ des mittleren Korndurchmessers des eingesetzten feinteiligen Polyolefins,

c) – gegebenenfalls – 0,1 bis 10 Gewichtsteilen eines globulären oder blättchenförmigen Additivs, das einen maximalen Teilchendurchmesser von <20 μm hat, einen mittleren Teilchendurchmesser aufweist, der kleiner als $^1/_{50}$ des mittleren Teilchendurchmessers des Polyolefins (a) ist und eine Erweichungstemperatur besitzt, die mindestens 50 °C über dem Kristallitschmelzpunkt des Polyolefins liegt sowie

d) – gegebenenfalls – üblichen Mengen üblicher anderer Zusatz- bzw. Hilfsstoffe,
dadurch gekennzeichnet, dass man die Komponente (a) vorlegt und gegebenenfalls mit (d) in einer ersten Arbeitsstufe (I) in einem Mischer gegebenenfalls unter Zu- oder Abfuhr kalorischer Wärme unter Rühren mischt, in einer ersten Unterstufe (I.1) bei einer Mischintensität im Bereich von 100 bis 500 W/l Nutzinhalt innerhalb einer Zeitspanne $(t_1)$ von 2 bis 50 Minuten von Umgebungstemperatur, die unterhalb der Kristallitschmelztemperatur des Polyolefins (a) liegt und insbesondere Raumtemperatur ist, auf eine Temperatur $(T_1)$ bringt, die 0 bis 15 °C unterhalb der Kristallitschmelztemperatur des Polyolefins (a) liegt; unmittelbar darauf im Verlauf einer zweiten Unterstufe (I.2) auf eine Mischintensität übergeht, die 0,2- bis 0,8mal so gross ist wie die Mischintensität in der ersten Unterstufe (I.1), und innerhalb einer Zeitspanne $(t_2)$ von 0,1 bis 10 Minuten von der Temperatur $(T_1)$ des Polyolefins (a) auf eine Temperatur $(T_2)$ bringt, die 1 bis 20 °C oberhalb der Kristallitschmelztemperatur des Polyolefins (a) liegt und weitgehend kontinuierlich über die Zeitspanne $(t_2)$ verteilt, Additiv (b), gegebenenfalls auch (c) oder Gemi-

sche aus (b) und (c) zugibt; unmittelbar hiernach in einer zweiten Arbeitsstufe (II) innerhalb einer Zeitspanne von 0,5 bis 30 Sekunden aus dem Mischer austrägt und innerhalb von 120 Sekunden auf eine Temperatur unterhalb der Kristallitschmelztemperatur des Polyolefins (a) bringt, oder das Produkt ohne weitere Abkühlung durch geeignete Vorrichtungen direkt plastisch weiterverarbeitet.

2. Verwendung der kleinteiligen Polyolefin-Formmassen nach Anspruch 1 zur Herstellung von Formkörpern nach üblichen Spritzguss-Extrusions- und Hohlkörperblasverfahren.

## Claims

1. A process for the production of particulate polyolefin moulding materials having improved properties, which are composed of
(a) 100 parts by weight of a particulate, partially crystalline polyolefin which has a particle diameter of from 10 to 5000 µm and an intrinsic viscosity [η], measured in decahydronaphthalene at 130 °C, of from 0.5 to 15,
(b) 0.001 to 2 parts by weight of a conventional stabilizer or a conventional stabilizer mixture against thermooxidative attack, the mean primary particle size — if the stabilizers are used in powder form — being from 0.1 to 50 µm and smaller than $^1/_{50}$ of the mean particle size of the particulate polyolefin used,
(c) if desired, 0.1 to 10 parts by weight of a globular or platelet-shaped additive with a maximum particle diameter of less than 20 µm and a mean particle diameter which is smaller than $^1/_{50}$ of the mean particle diameter of polyolefin (a), and having a softening temperature which is at least 50 °C above the crystallite melting point of the polyolefin, and
(d) if desired, usual amounts of other conventional additives and auxiliaries,
wherein component (a) is introduced first and is mixed with (d), if employed, in a first stage (I) in a mixer, with stirring and with or without the supply or removal of caloric heat, in the first substage (I.1) employing a mixing intensity of from 100 to 500 W/l of useful volume, component (a) or the mixture of (a) and (d) is brought, within a period $(t_1)$ of 2 to 50 minutes, from ambient temperature, which is below the crystallite melting point of polyolefin (a) and is in particular room temperature, to a temperature $(T_1)$ which is 0 to 15 °C below the crystallite melting point of polyolefin (a), whereupon in the course of a second substage (I.2) one changes over to a mixing intensity which is 0.2 to 0.8 times as great as the mixing intensity in the first substage (I.1), and component (a) or the mixture of (a) and (d) is brought, within a period $(t_2)$ of 0.1 to 10 minutes, from the temperature $(T_1)$ to a temperature $(T_2)$ which is 1 to 20 °C above the crystallite melting point of polyolefin (a), and additive (b) and any additive (c), or a mixture of (b) and (c) are/is added substantially continuously over the period $(t_2)$, whereupon in a second stage (II) the resulting mixture is removed from the mixer in the course of 0.5 to 30 seconds and brought in the course of 120 seconds to a temperature below the crystallite melting point of polyolefin (a), or the product is further processed direct in the plastic state, without further cooling, on appropriate apparatus.

2. The use of the particulate polyolefin moulding materials according to claim 1 for the production of mouldings by conventional injection moulding, extrusion and blow moulding methods.

## Revendications

1. Procédé de préparation de matières à mouler polyoléfiniques, possédant des propriétés améliorées, en fines particules, constituées de:
a) 100 parties en poids d'une polyoléfine partiellement cristallisée en fines particules d'un diamètre dans la gamme de 10 à 5000 µm, possédant une viscosité limite [η], mesurée à 130 °C dans la décaline, dans la gamme de 0,5 à 15;
b) 0,001 à 2 parties en poids d'un stabilisant usuel ou d'un mélange de stabilisants usuel vis-à-vis d'une attaque thermo-oxydante, la granulométrie primaire moyenne de ces stabilisants, s'ils sont mis en œuvre à l'état pulvérulent, se situant dans la gamme de 0,1 à 50 µm et devant être inférieure à $^1/_{50}$ du diamètre moyen des particules de la polyoléfine finement divisée utilisée;
c) éventuellement 0,1 à 10 parties en poids d'un additif de forme globulaire ou lamellaire en particules d'un diamètre maximal inférieur à 20 µm et d'un diamètre moyen inférieur à $^1/_{50}$ du diamètre moyen des particules de la polyoléfine (a);
d) éventuellement des proportions habituelles d'autres additifs ou adjuvants usuels,
caractérisé en ce que la composante (a) est chargée dans un malaxeur et, dans un premier stade opératoire (I), malaxée avec la composante (d) éventuelle, l'agitation se faisant avec apport ou élimination de chaleur de manière à la faire passer, dans un premier sous-stade (I.1), en un laps de temps $(t_1)$ et 2 à 50 minutes et avec une intensité du malaxage dans la gamme de 100 à 500 W par litre de volume utile, d'une température ambiante, qui est inférieure à la température de fusion des cristallites de la polyoléfine (a) et est généralement la température ordinaire, à une température $(T_1)$ de 0 à 15 °C inférieure à la température de fusion des cristallites de la polyoléfine (a), puis, immédiatement après, dans un deuxième sous-stade (I.2), dans lequel l'intensité du malaxage est de 0,2 à 0,8 fois celle dans le premier sous-stade (I.1), en un laps de temps $(t_2)$ de 0,1 à 10 minutes, de la température $(T_1)$ de la polyoléfine (a) à une température $(T_2)$, supérieure de 1 à 20 °C à la température de fusion des cristallites de la polyoléfine (a), avec addition sensiblement continue et répartie sur la durée $(t_2)$ de l'additif (b) et de l'additif (c) éventuel ou d'un mélange de (b) et de (c), suivi immédiatement d'un deuxième stade opératoire (II), dans lequel le produit est évacué en l'espace de 0,5 à 30 secondes du malaxeur et ramené en l'espace de 120 secondes à une température inférieure à la température de fusion des cristallites de la polyoléfine (a) ou soumis directement et sans refroidissement supplémentaire à un formage plastique dans des installations appropriées.

2. Utilisation des matières à mouler polyoléfiniques en fines particules suivant la revendication 1 pour la fabrication d'objets façonnés par des techniques de moulage par injection ou extrusion ou de soufflage de corps creux classiques.